# EUROPEAN PATENT SPECIFICATION

(11) **EP 2 132 527 B1**
(45) Date of publication and mention of the grant of the patent: **22.10.2014**
(21) Application number: 08714529.8
(22) Date of filing: 27.03.2008
(51) Int. Cl.: B64C 3/48, B64D 47/08, G03B 15/00

(54) **RETRACTABLE SYSTEM FOR AERONAUTICAL SENSORS**
EINFAHRBARES SYSTEM FÜR AERONAUTISCHE SENSOREN
SYSTÈME RÉTRACTABLE POUR CAPTEURS AÉRONAUTIQUES

(30) Priority: 02.04.2007 BR PI0701237
(43) Date of publication of application: 16.12.2009
(73) Proprietor: Embraer S.A., 12227-901 São José Dos Campos SP (BR)
(72) Inventor: DIAS FERRAZ, Mario Sergio, 12245-492 São José dos Campos, SP (BR)
(74) Representative: Liesegang, Eva
(86) International application number: PCT/BR2008/000088
(87) International publication number: WO 2008/119144

(56) References cited:
- WO-A1-95/30575
- JP-A- H06 166 399
- US-A- 2 207 084
- US-A- 4 188 631
- US-A- 5 365 291
- US-A- 5 918 834
- US-A- 5 918 834

## Description

The present invention patent discloses a constructive form for a retractable system applied in aircraft, said system having a mechanism contained in a protection compartment allowing retraction or exposition of a communication/navigation equipment, such as an optical-electronic sensor. The elucidated system presents a constructive disposition that makes possible to guarantee the integrity of the equipment, spending less space for accommodation, low influence in the air flow passing by the aircraft fuselage and, in consequence, low vibration of the equipment.

### Description of state of art

The aviation, either civilian or military, uses several electronic systems, which are fundamental for communication activities, navigation and warning (surveillance), such as sensors, antennas and radar. The optical sensors allow the pilot identify specifically geographical accidents in low visibility environments. The electronic systems, depending on the purpose and dimensions of the equipments, are allocated in the aircraft belly, disposed externally or in compartments having a specific fairing, characterizing a protuberance on the smooth lines of the aircraft.

The inconveniences of such protuberances reside in the fact of an increase in the aerodynamic drag, which influences the consumption of fuel, range and speed limit of the aircraft directly, and also promotes turbulence. Further, generally speaking, the properly said sensors present a spherical shape in whose surface is located one or more lenses with a circular format in plan. Once such sensors are exposed to airflow, they become susceptible to vibrations due detachment of aerodynamic vortexes. It is also known, that useful life of the sensors is related to the intensity of the vibrations which are proportional to dynamic pressure and exposure of the sensors to the airflow. Due the cost of such equipments and strategic importance in reconnaissance missions, the installation in aircraft is usually made in a way what the equipment is retractile, making possible its exposure when necessary and retraction when it is not in use.

Among the different types of known retractable systems, the most common are those that execute vertical movement as taught by patents US 3,982,250, US 3,656,164, US 4,593,288, US 5,969,686, US 5,918,834. However, such a vertical movement implicates in interfaces with the pressurized area of the aircraft or in generation of great protuberances on the exterior side of the fuselage and, consequently, the inconveniences above mentioned.

In other exposition/retraction pantographic systems also known, the operation kinematics is seen as a complex procedure mainly due to interaction with the articulated doors, which are defined by heavy mechanisms having big physical dimensions responsible for maintaining the compartment closed. This is because their surfaces generate disturbances in the air flow when they are extended during the flight, so that the whole assemblage becomes subject to strong vibrations which cause, along the time, mechanical wearing for the parts composing the system and damage to the sensors.

It is noticed that the previous state of art is replete of inconveniences that induce to high costs of operation and maintenance. Thus, the present invention discloses a new technique that suppresses such inconveniences, as well as it provides a smooth curvilinear surface that reduces turbulence and drag.

Document US 4,188,631 discloses an extendable infra-red antenna comprising disconnected articulated system which is driven by a crank in order to control the opening and closing of the doors and the extension and retraction of the antenna simultaneously. When retracted, the articulated system of the antenna is conducted to the center of the assembly, but not the door linkage. As a result, the door begins to open before the antenna begins to extend. When the antenna is fully extended its linkage lies outside the center position, however, the linkage of the door is driven to the center position. Thus, the antenna starts the retraction movement before the door starts to close.

### Summary of the invention

The objective of the present invention is to present a retractable system for aeronautical sensors which is capable to guarantee physical integrity of the equipment.

Another objective of the present invention is to present a retractable system for aeronautical sensors that makes possible exposition and retraction of the electronic equipment starting from a short angular movement.

Another objective of the present invention is to present a retractable system for aeronautical sensors that uses just a single door built in a fairing of the aircraft.

Another objective of the present invention is to present a retractable system for aeronautical sensors which doesn't require exaggerating protuberances on the aircraft fuselage or wing, thus allowing a minimal space for accommodation inside the aircraft.

### Brief description of drawings

The present invention will be briefly described based in an embodiment example represented by the drawings. The figures show:
Figure 1 - a schematic perspective view of an aircraft having a sensor according to previous state of art;
Figure 1b - a schematic perspective view of an infrared optical sensor in an exposed position.
Figure 2 - a side view of the retractable system for aeronautical sensors, in a retracted position;
Figure 3 - a side view of the retractable system for aeronautical sensors, in a position of exposition of the sensor.

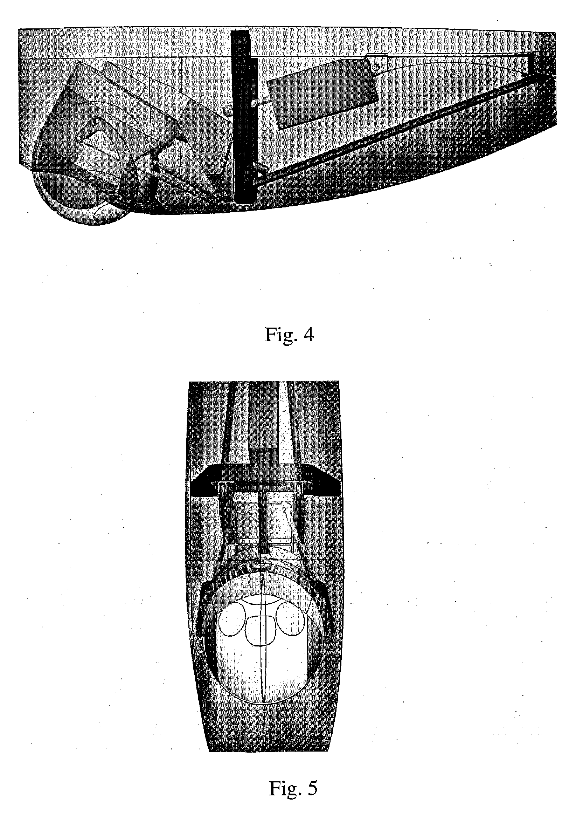

Figure 4 - a second side view of the retractable system for aeronautical sensors, in a position of retraction of the sensor.
Figure 5 - a lower view of the retractable system for aeronautical sensors, in a position of exposition of the sensor.

### Detailed description of the invention

The present invention solves the inconveniences of the previous state of art, through a sensor disposed in an articulated structure, which is movable through an actuator. There is a door, solidary to the sensor, fitted to the channel through a place where the sensor is exposed, so that the movement of the door and of the sensor is reduced, minimizing the adjustment and loosen spaces problems.

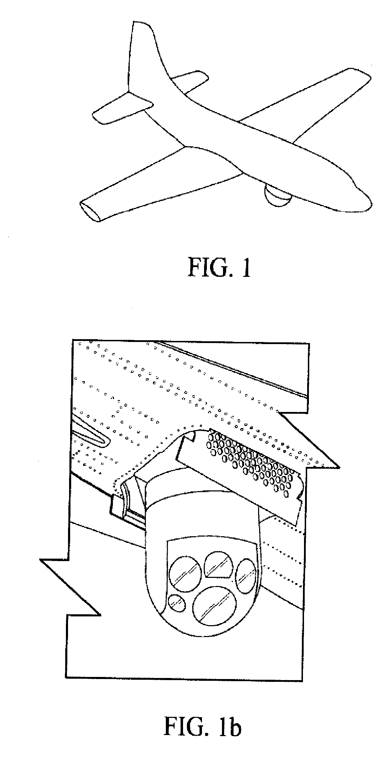

Figure 1 presents a schematic perspective view of an aircraft having a sensor, according to previous state of art, wherein it is noticed an area with bulbous shape located on the lower portion of the fuselage.

In figure 1b it is illustrated in details the sensor in exposed position according to previous state of art. In this representation, the exposition and retraction system doesn't have means that can impede the passage of air to the interior of the fuselage.

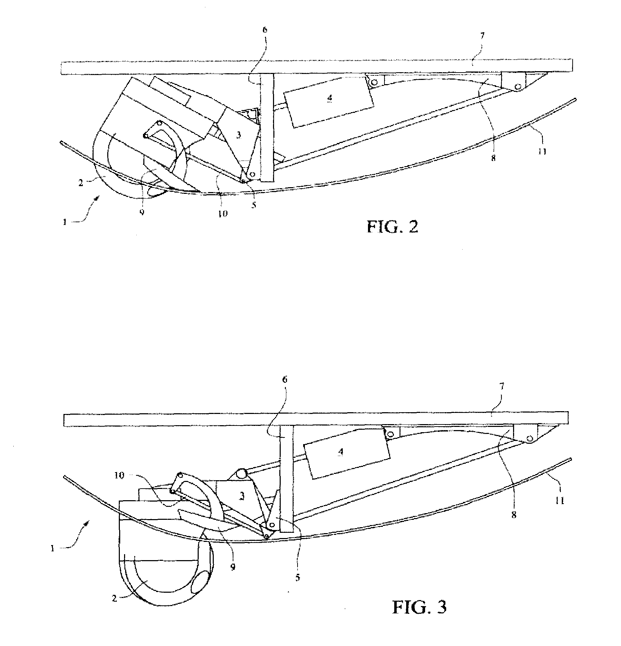

In the figure 2 it is exhibited the duramen of the present invention, the retractable system 1 being composed by an infrared optical sensor 2 or simply EO/IR (Electro-Optical/Infrared Remote) which is assembled to a structure 3 having a substantially trapezoidal profile which is articulated according to the action of an actuator device 4.

The structure 3 accomplishes angular movement whose turning point is located in an end mounted respectively on a bearing or articulation support 5. The articulation support 5 is fastened to the support 6 that is perpendicularly fastened in the face of the aircraft structure 7.

The actuator 4 can be electrically or hydraulically actuated and it presents one of its ends united to a support 8 that is fastened to the aircraft structure 7. The opposite end of the actuator 4, specifically the extremity of the piston, is articulated in relation to the structure 3 and it promotes the angular movement of said structure.

An articulated door 9 solidary to the movement of the structure 3 is mounted close to the internal wall of the fairing that protects the system. The movement of said door is limited by a pair of rods 10 that interconnect the articulation points of the hinges with the points of the structure 3.

The door 9 is defined by a substantially curved sheet fitting in practically half of the contour of the circular surface of said sensor 2.

From the condition showed in figure 2 to the condition presented in figure 3, basically, the kinematics of exposition of the retractable optical sensor is comprised by the action of the actuator 4, which upon pushing the piston promotes a simultaneous angular movement of the structure 3, door 9 and EO/IR 2. Such a movement makes the EO/IR sensor 2 to be positioned beyond the surface of the fairing 11, giving it operation conditions. In this condition, the EO/IR sensor 2 fills in integrally an opening in the fairing 11, thus impeding that the air flow generates improper vibrations to the other components comprising the retractable system 1.

The retraction of the mechanism, according to figure 2, is provided again by the actuator 4, which when pulling the piston rotates the structure 3, door 9 and EO/IR sensor 2. In this condition, the door 9 is responsible for obstructing the existent openings between the EO/IR sensor 2 and the opening of the fairing 11.

From the description above it is evident that the advantage of the present invention resides in the fact of providing a retractable system 1 capable of exposing and retracting the infrared optical sensor without the need of actuator devices and doors assembly demanding to be conditioned in voluminous protection fairings.

A small portion of the semi-spherical or ogival end of the sensor 2 is maintained projected outside of the fairing. However, the influence of such protuberance in the generation of drag is minimal.

These advantages are of relevant importance from the economical and strategic point of view, because besides increasing the useful life of the infrared optical sensor 2 and of the whole equipment, they also allow a best performance of the aircraft during the execution of its missions.

It was described an example of favourite materialization of the invention, and it should be understood that the scope of the present invention includes other possible variations, such as employment of several types of radar and/or antennas, and it is only limited by the tenor of the attached claims, comprising its possible equivalents.

## Claims

1. A retractable system for aeronautical sensors comprising a sensor (2) movable between retracted and extended positions relative to an aircraft structure (7), and:
an articulation support (5) fastened to the aircraft structure (7) by a support (6);
a structure (3) having one end fixed to the sensor (2) and an opposite end connected to the articulation support (5) to allow an angular movement of the structure (3), wherein the structure (3) supports the sensor (2) for movement between the retracted and extended positions thereof in response to articulated movement of the structure (3);
an articulated door (9) solidary to the movement of the structure (3); rods (10) operatively connected to the articulated door (9) and to the sensor support structure (3) for moving the articulated door (9);
and an actuator (4) operatively connected to the structure (3) for moving the structure (3) to thereby responsively cause the sensor (2) to move between the retracted and extended positions thereof and the articulated door (9) to move solidary to the movement of the structure (3) between a lowered and a raised positions, wherein the sensor (2) presents a cylindrical shape with a spherical end, **characterised by** that the articulated door (9) is mounted close to an internal wall of a fairing (11) and is defined by a substantially curved sheet and surrounds half of the contour of the circular surface of said sensor (2), fitting to said contour such that, in the retracted position of the sensor, the door (9) is responsible for obstructing the existent openings between the sensor (2) and the opening of the fairing (11).

2. The retractable system of claim 1, wherein the rods (10) interlink the articulation points of the hinges with the points of the structure (3).

3. The retractable system of claim 1, wherein the actuator (4) is electrically or hydraulically actuated and it promotes angular movement of the structure (3).

## Patentansprüche

1. Einziehbares System für aeronautische Sensoren, umfassend einen Sensor (2), der zwischen einer eingezogenen und einer ausgefahrenen Position in Bezug auf eine Flugzeugstruktur (7) bewegbar ist, und
eine Gelenkhalterung (5), die über eine Halterung (6) an der Flugzeugstruktur (7) angebracht ist;
eine Struktur (3), wobei ein Ende der Struktur an dem Sensor (2) angebracht ist und ein gegenüberliegendes Ende mit der Gelenkhalterung (5) verbunden ist, um eine Winkelbewegung der Struktur (3) zuzulassen, wobei die Struktur (3) den Sensor (2) für eine Bewegung zwischen der eingezogenen und der ausgefahrenen Position des Sensors abhängig von der Winkelbewegung der Struktur (3) trägt;
eine bewegliche Tür (9), die sich mit der Struktur (3) bewegt;
Stangen (10), die mit der beweglichen Tür (9) und mit der Sensortragstruktur (3) betrieblich gekoppelt sind, um die bewegliche Tür (9) zu bewegen;
und eine Betätigungseinrichtung (4), die mit der Struktur (3) betrieblich gekoppelt ist, um die Struktur (3) zu bewegen, um dadurch den Sensor (2) zwischen der eingezogenen und der ausgefahrenen Position des Sensors zu bewegen und die bewegliche Tür (9) gemeinsam mit der Bewegung der Struktur (3) zwischen einer abgesenkten und einer angehobenen Position zu bewegen, wobei der Sensor (2) eine zylindrische Form mit einem kugeligen Ende hat, **dadurch gekennzeichnet, dass** die bewegliche Tür (9) in der Nähe einer Innenwand einer Verkleidung (11) angebracht ist und durch ein im wesentlichen gekrümmtes Blech definiert ist und die Hälfte der Kontur der runden Oberfläche des Sensors (2) umgibt und an diese Kontur derart angepasst ist, dass die Tür (9) in der zurückgezogenen Position des Sensors vorhandene Öffnungen zwischen dem Sensor (2) und der Öffnung der Verkleidung (11) versperrt.

2. Einziehbares System nach Anspruch 1, wobei die Stangen (10) die Gelenkpunkte der Scharniere mit den Punkten der Struktur (3) verbinden.

3. Einziehbares System nach Anspruch 1, wobei die Betätigungseinrichtung (4) elektrisch oder hydraulisch betätigt ist und eine Winkelbewegung der Struktur (3) unterstützt.

## Revendications

1. Système rétractable pour des capteurs aéronautiques comprenant un capteur (2) pouvant être déplacé entre des positions rétractée et étendue par rapport à une structure d'avion (7), et
un support d'articulation (5) fixé à la structure d'avion (7) par un support (6) ;
une structure (3) ayant une extrémité fixée au capteur (2) et une extrémité opposée reliée au support d'articulation (5) pour permettre un déplacement angulaire de la structure (3), dans lequel la structure (3) supporte le capteur (2) pour un déplacement entre les positions rétractée et étendue de celui-ci en réponse à un déplacement articulé de la structure (3) ;
une porte articulée (9) solidaire du déplacement de la structure (3) ;
des bielles (10) reliées de manière fonctionnelle à la porte articulée (9) et à la structure de support de capteur (3) pour déplacer la porte articulée (9) ;
et un actionneur (4) relié de manière fonctionnelle à la structure (3) pour déplacer la structure (3) pour, de ce fait, amener en réponse le capteur (2) à se déplacer entre les positions rétractée et étendue de celui-ci et la porte articulée (9) à se déplacer de manière solidaire du déplacement de la structure (3) entre des positions abaissée et élevée, dans lequel le capteur (2) présente une forme cylindrique avec une extrémité sphérique, **caractérisé en ce que** la porte articulée (9) est montée à proximité d'une paroi interne d'une coiffe de protection (11) et est définie par une feuille sensiblement incurvée et entoure une moitié du contour de la surface circulaire dudit capteur (2), en s'assemblant au dit contour de sorte que, dans la position rétractée du capteur, la porte (9) est chargée d'obstruer les ouvertures existantes entre le capteur (2) et l'ouverture de la coiffe de protection (11).

2. Système rétractable selon la revendication 1, dans lequel les bielles (10) interconnectent les points d'articulation des articulations avec les points de la structure (3).

3. Système rétractable selon la revendication 1, dans lequel l'actionneur (4) est actionné électriquement ou hydrauliquement et il favorise un déplacement angulaire de la structure (3).
